# EUROPÄISCHE PATENTSCHRIFT

(11) **EP 1 366 352 B1**
(45) Veröffentlichungstag und Bekanntmachung des Hinweises auf die Patenterteilung: **30.05.2007**
(21) Anmeldenummer: 02748330.4
(22) Anmeldetag: 05.03.2002
(51) Int. Cl.: G01N 21/64, G02B 21/00

(54) **VERFAHREN ZUR UNTERSUCHUNG CHEMISCHER UND/ODER BIOLOGISCHER PROBEN**
METHOD FOR ANALYSING CHEMICAL AND/OR BIOLOGICAL SAMPLES
PROCEDE D'ETUDE D'ECHANTILLONS CHIMIQUES ET/OU BIOLOGIQUES

(30) Priorität: 06.03.2001 DE 10110594
(43) Veröffentlichungstag der Anmeldung: 03.12.2003
(73) Patentinhaber: Evotec AG, 22525 Hamburg (DE)
(72) Erfinder: MÜLLER, Jürgen, 22529 Hamburg (DE); HUMMEL, Stefan, 25489 Haseldorf (DE)
(74) Vertreter: von Kirschbaum, Alexander
(86) Internationale Anmeldenummer: PCT/EP2002/002372
(87) Internationale Veröffentlichungsnummer: WO 2002/071043

(56) Entgegenhaltungen:
- WO-A-02/06796
- DE-A- 19 950 225
- US-A- 4 328 410
- US-A- 5 293 265

## Beschreibung

Die Erfindung betrifft ein Verfahren zur Untersuchung chemischer und/oder biologischer Proben, insbesondere im Hoch- und Medium-Durchsatzscreening. Ferner betrifft die Erfindung ein Mikroskop zur Durchführung des Verfahrens, wie es insbesondere in der Fluoreszenzspektroskopie eingesetzt wird.

Mit Mikroskopen werden die sich in einem Beobachtungsvolumen abspielenden Prozesse optisch erfasst. Bekannte konfokale Mikroskope weisen eine Beleuchtungseinheit, wie beispielsweise einen Laser, zur Erzeugung eines Beobachtungsstrahls, insbesondere eines Anregungslichts, auf. Das Anregungslicht trifft ggf. nach Konditionierung durch eine Linsenanordnung auf einen dichroitischen Spiegel, der das Licht in Richtung des Beobachtungsvolumens reflektiert. Anschließend gelangt das Licht durch ein Linsensystem, insbesondere ein Mikroskopobjektiv, von dem das Anregungslicht in dem Beobachtungsvolumen fokussiert wird. In dem Beobachtungsvolumen, in dem sich beispielsweise biologische und/oder chemische Proben befinden, wird je nach deren. Zusammensetzung durch das Anregungslicht, beispielsweise Fluoreszenz, hervorgerufen. Das hierbei entstehende Fluoreszenzlicht gelangt durch das Mikroskopobjektiv und durch den dichroitischen Spiegel zu einer Detektoreinheit. Der Detektoreinheit kann eine Aperturblende vorgeschaltet sein, in die das Fluoreszenzlicht fokussiert ist, so dass ein konfokales Mikroskop ausgebildet ist.

Bei konfokalen Mikroskopen, die sich in der Praxis grundsätzlich bewährt haben, besteht insbesondere bei großen Molekülen das Problem, dass diese sich aufgrund der Brownschen Molekularbewegung nur langsam bewegen. Es kann daher vorkommen, dass das zu untersuchende Molekül erst nach einem längeren Zeitraum durch den Fokus des Mikroskopobjektivs wandert. Dies kann zu einer Verfälschung der Messergebnisse führen, da die Reaktivität oder die Fluoreszenzemission des Moleküls beispielsweise schon wieder abgenommen hat. Ferner ist es insbesondere beim Hoch- und Medium-Durchsatzscreening, d. h. beim Untersuchen einer Vielzahl von Proben in kurzen Zeitabständen, nachteilig eine Probe relativ lang beobachten zu müssen, um ein Ergebnis zu erzielen.

Um diese Anforderungen zu erfüllen, ist es beispielsweise möglich, die Probe zu bewegen. Dies ist äußerst aufwendig und führt ggf. zu ungewollten Bewegungen oder Reaktionen innerhalb der Probe. Dies kann wiederum zur Verfälschung von Messergebnissen führen.

Eine weitere Möglichkeit besteht darin, den Strahl des Anregungslichts zu bewegen. Zur Bewegung des Lichtstrahls ist es bekannt, im Strahlengang des Mikroskops einen oder mehrere Spiegel vorzusehen, die über einen geeigneten Antriebsmechanismus hin und her kippbar sind. Durch das Vorsehen von zwei Spiegeln ist es möglich, den Lichtstrahl innerhalb einer Ebene des Beobachtungsvolumens zu bewegen. Derartige Anordnungen haben den Nachteil, dass die Kippbewegung des Spiegels einen Totpunkt aufweist, so dass die Bewegung des Lichtstrahls abgebremst und beschleunigt wird. Dies führt zu einer ungleichmäßigen Anregung des Ensembles innerhalb der Probe und somit zu einer Verfälschung der Messergebnisse. Dies beruht insbesondere darauf, dass am Totpunkt das Fluoreszenzmolekül länger bestrahlt wird und somit mehr Photonen abgeben kann oder das Molekül stärker gebleicht wird. Ferner weisen Mikroskope mit kippbaren Spiegeln den Nachteil auf, dass der Lichtstrahl in unterschiedlichen Winkeln zur optischen Achse des Mikroskopobjektivs durch das Objektiv hindurchtritt. Dies hat einen sich in Abhängigkeit der Neigung des Kippwinkels ändernden optischen Fehler zur Folge, der wiederum die Messergebnisse negativ beeinflusst. Ferner wird der Fokus eines schräg durch das Mikroskopobjektiv geleiteten Lichtstrahls oval. Die Form des Fokus ändert sich somit ebenfalls in Abhängigkeit der Lage des Kippspiegels. Dies führt ebenfalls zu einer Verfälschung der Messergebnisse.

DE 199 50 225 beschreibt eine Anordnung zur optischen Abtastung eines Objekts, wobei im Beleuchtungs-/Detektionsstrahlengang eine Linse oder ein Objektiv und mindestens ein Spiegel angeordnet ist, der mit einer zur Abtastfläche des Objekts weitgehend orthogonalen Drehachse dreht bzw. schwenkt.

US 4,328,410 beschreibt eine Vorrichtung sowie ein Verfahren zum Entfernen einer Plastikschicht, die auf ein Metallsubstrat laminiert ist. Dafür wird ein Laser mit hoher Intensität auf das Metallsubstrat mit der Plastikschicht gerichtet. Dabei wird das Metallsubstrat auf einem beweglichen Tisch verschoben und der Laser durch einen rotierenden Spiegel derart abgelenkt, dass er auf dem Metallsubstrat kontinuierlich kreisförmige Bewegungen ausführt.

US 5,293,265 beschreibt ebenfalls einen Spiegel, der um eine Achse rotiert wird, deren Winkel zum Spiegel derart verstellt werden kann, dass der Durchmesser der Kreisbahnen des reflektierten Laserstrahls variiert werden kann.

Vorstehende Nachteile bestehen sowohl bei konfokalen als auch bei anderen Mikroskopen. Insbesondere beim Hoch- und Medium-Durchsatzscreening müssen die Messdaten in sehr kurzer Zeit erfasst werden. Dies hat zur Folge, dass Fluoreszenzmarker mit relativ hoher Energie angeregt werden müssen. Hierbei führen bereits geringfügige Unregelmäßigkeiten in der Anregung, insbesondere ein zu langes Anregen der Marker, zu Verfälschungen der Messergebnisse sowie ggf. zur Zerstörung der Marker.

Aufgabe der Erfindung ist es, ein Verfahren zur Untersuchung chemischer und/oder biologischer Proben, insbesondere für das Hoch- und Medium-Durchsatzscreening zu schaffen, mit dem ein Bewegen des Fokus durch das Beobachtungsvolumen bei Verbesserung der Messergebnisse möglich ist. Ferner ist es Aufgabe der Erfindung, eine Vorrichtung zur Durchführung des Verfahrens zu schaffen.

Die Lösung der Aufgabe erfolgt erfindungsgemäß durch die Merkmale des Anspruchs 1 bzw. 8.

Bei dem erfindungsgemäßen Verfahren erfolgt die Bewegung des Beobachtungsstrahls im Wesentlichen kontinuierlich. Die Bewegung des Beobachtungsstrahls, bzw. des Anregungslichtes, erfolgt in dem Beobachtungsvolumen der Probe somit ohne eine Richtungsumkehr, die zu einem erheblichen Abbremsen und Beschleunigen der Bewegung des Lichtstrahls führt. Durch diese Vergleichmäßigung der Bewegung des Lichtstrahls in dem Beobachtungsvolumen erfolgt bei der Untersuchung von Proben, die zur Fluoreszenz angeregt werden sollen, eine erhebliche Vergleichmäßigung der Anregung. Hierdurch ist beispielsweise das Zerstören von Fluoreszenzmarkern durch eine erhöhte Anregung verhindert. Durch das gleichförmige Bewegen des Beobachtungsstrahls durch das Beobachtungsvolumen kann die Qualität der Messergebnisse erheblich verbessert werden.

Ein weiterer Vorteil des erfindungsgemäßen Verfahrens besteht darin, dass bei einer konstanten bzw. vergleichmäßigten Bewegung des Beobachtungsstrahls durch die Probe Fluktuationszeiten von einzelnen Partikeln, wie Molekülen (FIMDA-Messungen), besser durchgeführt werden können. Dies ist darin begründet, dass die Bewegungsgeschwindigkeit des Beobachtungsstrahls bei der Bestimmung der Fluktuationszeiten berücksichtigt werden muss. Hierbei ist eine konstante oder annähernd konstante Geschwindigkeit des Bewegungsstrahls erheblich einfacher zu berücksichtigen. Des Weiteren sind die Beobachtungszeiten je Partikel vergleichmäßigt. Dies bedeutet, dass von jedem Partikel beispielsweise die selbe Anzahl an Informationen erfasst wird. Hierdurch ist die statistische Qualität der Daten erheblich verbessert.

Bei dem Beobachtungsstrahl kann es sich erfindungsgemäß um einen von einer Beleuchtungseinrichtung, wie einem Laser, erzeugten Strahl handeln, der durch das erfindungsgemäße Verfahren vergleichmäßigt in der Probe bewegt wird. Hierbei handelt es sich dann beispielsweise um Anregungslicht. Bei dem Beobachtungsstrahl kann es sich jedoch auch um den Strahlengang der Beobachtung handeln. Der Strahlengang verläuft hierbei in umgekehrter Richtung. Hierbei wird beispielsweise der von einem Detektor beobachtete Bereich in der Probe bewegt. Beobachtet wird somit beispielsweise die Fluoreszenz einer Probe, d.h. von der Probe abgegebene Strahlung.

Vorzugsweise erfolgt die Bewegung des Beobachtungsstrahls unidirektional. Ein Umkehren der Bewegungsrichtung ist somit vermieden. Dies hat zur Folge, dass starke Schwankungen innerhalb des Beleuchtungsvolumens der erzeugten oder beobachteten Photonen-Menge, d.h. Schwankungen an unterschiedlichen Beleuchtungs- bzw. Beobachungsorten, vermieden sind. Unter Photonen-Menge wird hierbei die Anzahl der erzeugten bzw. abgegebenen Photonen je Ort verstanden. Bei der Photonen-Menge handelt es sich somit um die über die Zeit integrierte Intensität. Bei einer konstanten Bewegungsgeschwindigkeit des Beobachtungsstrahls in der Probe ist die Verweilzeit des Strahls an jedem Ort der Probe konstant bzw. schwankt in erheblich geringeren Grenzen als bei bekannten Verfahren. Hierdurch kann die Qualität der Messergebnisse erheblich verbessert werden. Vorzugsweise wird der Beleuchtungsstrahl auf einer in sich geschlossenen Bahn, vorzugsweise einer elliptischen Bahn, und besonders bevorzugt einer im Wesentlichen kreisförmigen Bahn, bewegt.

Zur Durchführung der Bewegung des Beobachtungsstrahls in dem Beobachtungsvolumen ist es besonders bevorzugt, einen Auslenkspiegel zu verwenden, der um eine Rotationsachse drehbar ist. Die Rotationsachse schließt hierbei mit der Fläche des Auslenkspiegels einen Winkel ≠ 90° ein. Durch die hierdurch entstehende Taumelbewegung des Auslenkspiegels wird der Beobachtungsstrahl entlang einer elliptischen Bahn in dem Beobachtungsvolumen bewegt. Hierdurch sind unterschiedliche Verweildauern an einzelnen Beleuchtungsorten innerhalb des Beobachtungsvolumens gegenüber einem Hin- und Herbewegen des Beobachtungsstrahls erheblich verringert.

Auf Grund der elliptischen Form der Bahn ist die Bewegungsgeschwindigkeit des Beobachtungsstrahls in dem Beobachtungsvolumen jedoch nicht konstant. Insbesondere im Bereich der Scheitel der Ellipse weist der Beobachtungsstrahl eine langsamere Geschwindigkeit auf. Es ist daher erfindungsgemäß besonders bevorzugt, die Verweildauer des Beleuchtungsstrahls dadurch zu vergleichmäßigen, dass die Rotationsgeschwindigkeit des Auslenkspiegels variiert wird. Dies bedeutet, dass die Rotationsgeschwindigkeit so eingestellt wird, dass der Beobachtungsstrahl in dem Beobachtungsvolumen eine allenfalls innerhalb enger Grenzen schwankende Geschwindigkeit aufweist. Vorzugsweise ist die Geschwindigkeit im Wesentlichen konstant.

Bei einer weiteren bevorzugten Ausführungsform wird zur Vergleichmäßigung der auf unterschiedliche Beleuchtungsorte in der Probe wirkende Beleuchtungsintensität, die insbesondere in Abhängigkeit der Verweilzeit, d.h. der Bewegungsgeschwindigkeit, des Beobachtungsstrahls bzw. Anregungsstrahls variiert, dadurch bewirkt, dass die Intensität des Beobachtungsstrahls in Abhängigkeit der Bewegungsgeschwindigkeit gesteuert wird. Die durch den Beobachtungsstrahl erzeugte Photonen-Menge wird durch ein geschwindigkeitsabhängiges Steuern der Beleuchtungsintensität vergleichmäßigt. Erfindungsgemäß wird die Intensität des Beobachtungsstrahls somit verringert, wenn sich der Beobachtungsstrahl relativ langsam in dem Beobachtungsvolumen bewegt. Hierdurch kann ebenfalls eine Vergleichmäßigung der Messergebnisse erzielt werden. Insbesondere bei auf Fluoreszenz basierenden Messungen kann hiermit erzielt werden, dass die einzelnen Partikel gleichmäßig angeregt werden. Hiermit ist ein Verfälschen der Messergebnisse durch ungleichmäßige Anregung oder ein Zerstören der Fluoreszenzmarker vermieden.

Bei der Steuerung der Intensität des Beobachtungsstrahls, die beispielsweise durch eine zeitabhängige Modulation eines Lasers erfolgen kann, handelt es sich um eine selbständige Erfindung, die unabhängig von der kontinuierlichen Bewegung des Beobachtungsstrahls ist. Beispielsweise kann auch bei einem einfachen Hin- und Herbewegen des Beobachtungsstrahl, beispielsweise durch einen kippenden Spiegel, eine Vergleichmäßigung der Beleuchtungsintensität durch entsprechende Steuerung der Intensität des Beleuchtungsstrahls erzielt werden. Besonders bevorzugt ist jedoch eine Kombination der Geschwindigkeitsvariierung und der Variierung der Beleuchtungsintensität zur Vergleichmäßigung. Dies hat den Vorteil, dass die Geschwindigkeit des beispielsweise rotierenden Ablenkspiegels nur geringfügig variiert werden muss, so dass die auftretenden Trägheitsmomente nicht zu hoch werden. Auch das Variieren der Intensität des Beleuchtungsstrahls ist bei geringen Anpassungen erheblich einfacher realisierbar als bei großen Schwankungen.

Das Anpassen der Beleuchtungsintensität kann beispielsweise auch durch Filter, die an die Bahnform angepasst sein können, erfolgen.

Das Mikroskop weist zur Durchführung des erfindungsgemäßen Verfahrens einen Auslenkspiegel auf, der einen von einer Beleuchtungseinheit erzeugten Beobachtungsstrahl, wie ein Anregungslicht, ablenkt. Hierdurch wird der Fokus in dem Beobachtungsvolumen bewegt. Anstelle einer Kippbewegung führt der Auslenkspiegel erfindungsgemäß eine Taumelbewegung durch. Durch die Taumelbewegung wird der Fokus entlang einer geschlossenen Bahn in dem Beobachtungsvolumen bewegt. Die Bewegung ist somit kontinuierlich. Ein vollständiges Abbremsen und anschließendes Beschleunigen des Lichtstrahls, wie es bei Kippspiegeln auftritt, ist bei einem eine Taumelbewegungen ausführenden Spiegel nicht der Fall. Ferner ist die erfindungsgemäße Ausgestaltung des Mikroskops erheblich preisgünstiger zu realisieren als das Vorsehen von Kippspiegeln bzw. sogenannten Galvo-Scannern, die aufwendige Antriebs- und Steuerelektronik aufweisen. Da eine kontinuierliche Bewegung des Lichtstrahls auf einer Bahn mit der erfindungsgemäßen Vorrichtung realisiert ist und ein starkes Abbremsen und Beschleunigen vermieden ist, sind ferner höhere Scanngeschwindigkeiten als mit Kippspiegeln möglich. Bei Kippspiegeln muss insbesondere die erhebliche Massenträgheit der Spiegel berücksichtigt werden, durch die schnelle Spiegelbewegungen verhindert sind. Bei schnellen Spiegelbewegungen können ferner Vibrationen auftreten, die die Messung beeinträchtigen.

Ferner kann ein Mikroskop lediglich zur Beobachtung der Probe dienen. Bei einem derartigen Mikroskop würde kein von einer Beleuchtungseinheit erzeugter Strahl in eine Taumelbewegung versetzt. Der Taumelspiegel oder eine andere geeignete Vorrichtung dient hierbei zum Bewegen der von einem Beobachtungsdetektor beobachteten Stelle in der Probe.

Die Taumelbewegung kann beispielsweise durch eine Dreipunktaufnahme an der Rückseite des Spiegels hervorgerufen werden. Hierbei kann der Spiegel durch Bewegung der einzelnen Aufnahmen in eine Taumelbewegung versetzt werden.

Bei der bevorzugten Ausführungsform wird der Spiegel um eine Rotationsachse gedreht. Hierbei schließt der Auslenkspiegel mit der Rotationsachse einen. Winkel ungleich 90° ein. Allein aufgrund der Rotation des Spiegels entsteht eine Taumelbewegung und hierdurch eine entsprechende Bewegung des Lichtstrahls in dem Beobachtungsvolumen.

Bei einem Mikroskop zur Untersuchung von Kleinstproben, die beispielsweise im Mikroliter- oder auch Submikroliterbereich liegen können, ist der Winkel des Auslenkspiegels gegenüber der Rotationsachse im Bereich von 90,1° - 95°, vorzugsweise 90,1° - 92°, besonders bevorzugt 90,1° - 91°. Dies führt .bei einer typischen Objektivbrennweite von f = 5 mm zu Kreisbewegung mit Radien von r = f · tan (d - 90°) = 8 µm - 450 µm (bevorzugt 8 µm - 180 µm, besonders bevorzugt 8 µm - 90 µm).

Eine Kreisbewegung kann bei einem eine Taumelbewegung ausführenden Spiegel vorzugsweise dadurch hervorgerufen werden, dass der Strahlengang parallel zur Rotationsachse ist. Bei einem in einem Winkel zur Rotationsachse verlaufenden Strahl erfolgt eine elliptische Bewegung des Beobachtungsstrahls in der Probe bzw. in dem Beobachtungsvolumen.

Vorzugsweise wird der Auslenkspiegel derart bewegt, dass der Fokus in dem Beobachtungsvolumen auf einer geschlossenen Bahn bewegt wird. Hierbei muss die Taumelbewegung in Abhängigkeit der Oberfläche des Spiegels und dem Reflektionspunkt des Lichtstrahls auf dem Spiegel relativ zum Zentrum der Taumelbewegung berücksichtigt werden. Bei einer durch Rotation hervorgerufenen Taumelbewegung und einem vorzugsweise ebenen Auslenkspiegel können gute Messergebnisse dadurch erzielt werden, dass das Anregungslicht im Wesentlichen im Rotationszentrum des Auslenkspiegels auf den Spiegel trifft. Eine derartige Anordnung weist den Vorteil auf, dass der Lichtstrahl stets im gleichen Abstand zur Mittelachse des Messobjektivs das Messobjektiv passiert. Die Verschlechterung des Fokus gegenüber einem das Objektiv in der Objektivachse passierenden Lichtstrahls ist somit im Wesentlichen konstant und kann daher, beispielsweise durch eine angepasste Justage, gezielt kompensiert werden. Da somit keine Änderung des Fokus in Abhängigkeit der Lage des Spiegels bzw. der Lage des Fokus in der Probe hervorgerufen wird, sind die erzielbaren Messergebnisse erheblich verbessert.

Vorzugsweise ist der Winkel des Spiegels gegenüber der Rotationsachse bzw. gegenüber dem auf den Auslenkspiegel treffenden Lichtstrahl einstellbar. Beispielsweise ist hierzu eine Verstelleinheit für das automatische Verstellen des Winkels des Auslenkspiegels vorgesehen. Dies hat den Vorteil, dass beispielsweise auch während des Untersuchens einer Probe der Winkel des Auslenkspiegels und damit die Bahn des Fokus in der Probe verändert werden kann. Bei einem im Rotationszentrum des Auslenkspiegels auftreffenden Anregungsstrahl kann durch Verstellen des Winkels der Radius der Kreisbewegung des Fokus bzw. der Hauptachsen der Ellipse, in der Probe verändert werden. Auf diese Weise ist es möglich ein vollständiges Abtasten der Probe in einer Ebene zu realisieren.

Eine weitere Möglichkeit zum vollständigen Abtasten einer Probe in einer Ebene besteht darin, den Winkel des Auslenkspiegels während der Untersuchung konstant zu halten, so dass sich der Fokus auf einer gleich bleibenden Bahn bewegt. Zum Abtasten der Probe wird nun zusätzlich der Tisch, von dem die zu untersuchende Probe gehalten wird, bewegt. Die Bewegung des Tisches kann hierbei ein- oder zweidimensional sein. Ferner ist es möglich, die beiden vorstehenden Verfahren zum Abtasten einer Probe insbesondere in einer Ebene zu kombinieren, wenn nach dem konfokalen Prinzip gearbeitet wird.

Es ist ferner möglich, bei einem Mikroskop den vorhandenen als Strahlteiler dienenden dichroitischen Spiegel derart auszugestalten, dass dieser als Auslenkspiegel dient und in eine geeignete Taumelbewegung versetzt werden kann. Hierzu ist der dichroitische Spiegel vorzugsweise in einer Kulissenführung gelagert. Die Drehung erfolgt von außen, so dass der Strahlengang nicht beeinträchtigt wird. Da ein derartiges Bewegen des Strahlteilers auch zu einer entsprechenden Bewegung des auf dem Detektor abgebildeten Bildes führt, wird als Detektor bei dieser Ausführungsform vorzugsweise ein Flächensensor, beispielsweise eine großflächige Photodiode, eingesetzt. Mit Hilfe eines großflächigen Photodetektors kann bei einem nicht konfokalen Mikroskop die Detektorfläche integriert ausgelesen werden, da das auf den Detektor auftreffende Licht unabhängig von dem Ort, an dem es auf den Detektor auftrifft, dasselbe Signal erzeugt.

Bei dem vorstehend beschriebenen Mikroskop handelt es sich insbesondere um ein konfokales Mikroskop. Bei einem konfokalen Mikroskop können die Meßergebnisse durch den Einsatz des erfindungsgemäßen Auslenkspiegels erheblich verbessert werden.

Eine weitere Ausführungsform betrifft eine Auslenkeinheit für ein Mikroskop zum optischen Erfassen eines Beobachtungsvolum'ens. Die Auslenkeinheit weist einen mit einer Antriebseinheit verbundenen Auslenkspiegel auf, der von der Antriebseinheit in eine Taumelbewegung versetzt werden kann. Bei der Auslenkeinheit handelt es sich um ein Zusatzbauteil, das mit einem herkömmlichen Mikroskop verbunden werden kann. Hierzu weist die Auslenkeinheit vorzugsweise ein die Antriebseinheit und/oder den Auslenkspiegel tragendes Gehäuse auf. Das Gehäuse weist ein Anschlusselement zum Verbinden mit einer Objektivaufnahme eines Mikroskops und ein Aufnahmeelement zur Aufnahme eines Mikroskopobjektivs auf. Es ist somit beispielsweise möglich, bei einem herkömmlichen Mikroskop das Mikroskopobjektiv zu entfernen, statt dessen die Auslenkeinheit in die Objektivaufnahme einzusetzen und das vorher entfernte Mikroskopobjektiv an dem Aufnahmeelement des Gehäuses zu befestigen. Somit ist ein herkömmliches Mikroskop durch die Auslenkeinheit einfach auf ein erfindungsgemäßes Mikroskop mit einem eine Taumelbewegung ausführenden Spiegel umrüstbar.

Der in der Auslenkeinheit vorgesehene Auslenkspiegel kann die vorstehend beschriebenen bevorzugten Weiterbildungen aufweisen.

Die vorstehend beschriebene Auslenkeinheit ist insbesondere zum Einsatz bei einem konfokalen Mikroskop geeignet.

Nachfolgend wird die Erfindung anhand bevorzugter Ausführungsformen unter Bezugnahme auf die anliegenden Zeichnungen näher erläutert.

Es zeigen:
- Fig. 1: eine schematische Ansicht eines konfokalen Mikroskops mit einem erfindungsgemäß rotierbaren Auslenkspiegel,
- Fig. 2: eine schematische, teilweise geschnittene Seitenansicht einer erfindungsgemäßen Auslenkeinheit und
- Fig. 3: eine Ansicht des in Fig. 2 dargestellten Mikroskopobjektivs von oben in Richtung des in Fig. 2 dargestellten Pfeils III.

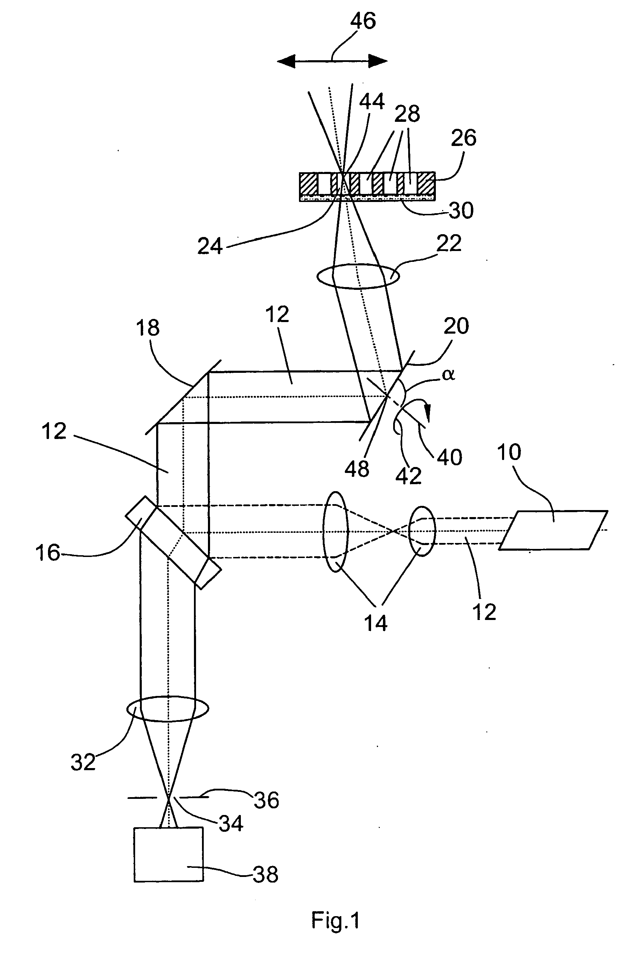

Das in Fig. 1 schematisch dargestellte konfokale Mikroskop weist eine Beleuchtungseinrichtung 10 in Form eines Lasers auf. Das von dem Laser erzeugte Anregungslicht 12 wird durch eine Linsenanordnung 14 auf einen Strahlteiler 16 gelenkt. Durch den Strahlteiler 16 wird das Anregungslicht in Richtung eines Umlenkspiegels 18 gelenkt. Von diesem wird es in Richtung eines Auslenkspiegels 20 reflektiert, der das Anregungslicht in Richtung eines Mikroskopobjektivs 22 reflektiert. Von dem Mikroskopobjektiv 22 wird das Anregungslicht 12 in ein Beobachtungsvolumen 24 fokussiert.

Im dargestellten Ausführungsbeispiel ist das Beobachtungsvolumen 24 eine Vertiefung einer Titerplatte 26, deren Öffnungen 28 durch einen Glasboden 30 verschlossen sind.

Das von der in der Vertiefung 28 vorgesehenen Probe abgegebene Licht wird in entgegengesetzte Richtung durch das Mikroskopobjektiv geleitet und von dem Auslenkspiegel 20 und Umlenkspiegel 18 in Richtung des Strahlenteilers 16 reflektiert. Von dem Strahlenteiler 16 wird das aus dem Beobachtungsvolumen 24 kommende Licht in Richtung einer Tubuslinse 32 umgelenkt. Die Tubuslinse 32 fokussiert das Licht in einer Öffnung 34 einer Aperturblende 36. Anschließend gelangt das Licht auf eine Detektoreinheit 38.

Der Umlenkspiegel 18 ist in dem dargestellten Ausführungsbeispiel in einem Winkel von 45° zu dem Anregungslicht 12 angeordnet. Hierdurch entsteht ein Auslenken des Anregungslichts 12 aus dem üblichen Strahlenverlauf. Dies hat den Vorteil, dass eine Antriebseinheit des Auslenkspiegels 20 einfach außerhalb des Strahlengangs vorgesehen werden kann. Ferner ist die übliche Anordnung des konfokalen Mikroskops gewahrt, bei dem eine Probe von unten beleuchtet wird.

Der Auslenkspiegel 20 führt eine Taumelbewegung aus, in dem er um eine Rotationsachse 40 in Richtung eines Pfeils 42 drehbar ist. Der Spiegel 20 schließt mit der Rotationsachse einen Winkel α ein, der ungleich 90° ist. Bei dem Winkel α handelt es sich um den größeren der beiden Winkel zwischen der Rotationsachse 40 und dem Spiegel 20. Durch die Rotation des Spiegels 20 ändert sich der Einfallswinkel zwischen dem vom Umlenkspiegel - 18 kommenden Anregungslicht 12 je nach Rotationslage des Auslenkspiegels 20. In der in Fig. 1 dargestellten Projektion erfolgt hierdurch eine Bewegung eines Fokus 44 in dem Beobachtungsvolumen 24 in linearer Richtung in Richtung des Pfeils 46. Von oben gesehen, erfolgt eine Bewegung des Fokus 44 auf einer geschlossenen Bahn, bei der es sich um eine Ellipse handelt. Wenn das Anregungslicht im Wesentlichen im Rotationszentrum 48 auf den Auslenkspiegel 20 trifft, ist die Kreisbewegung konzentrisch zur Strahlachse.

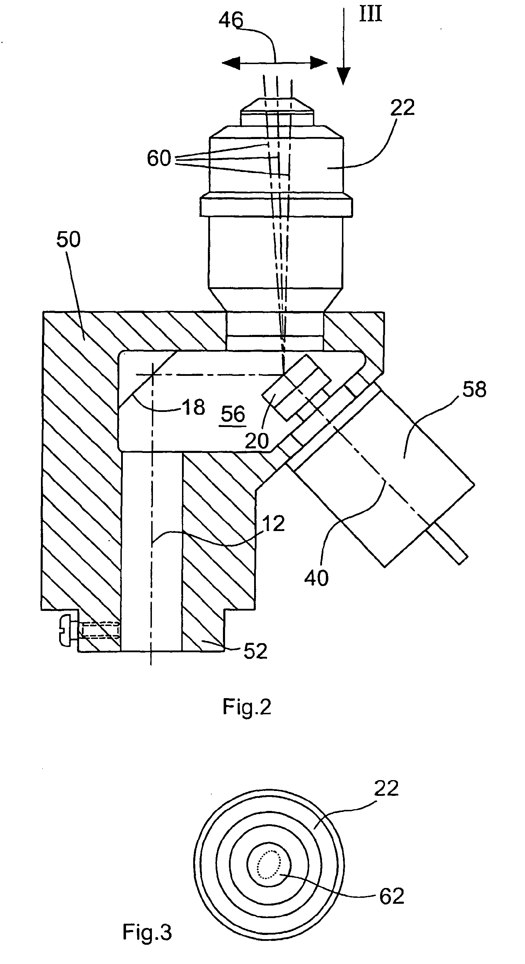

Bei der in den Fign. 2 und 3 dargestellten Auslenkeinheit handelt es sich um ein Anbauteil für ein herkömmliches konfokales Mikroskop. Die Auslenkeinheit umfasst ein Gehäuse 50. Das Gehäuse 50 weist ein Anschlusselement 52 auf. Hierbei handelt es sich beispielsweise um eine Klemmvorrichtung. Über einen geeigneten Adapter kann die Auslenkeinheit mit einer üblichen Objektivaufnahme verbunden werden. Das Anschlusselement wird mit dem konfokalen Mikroskop in der Weise verbunden, dass es mit der üblicherweise zur Aufnahme des Mikroskopobjektivs 22 dienenden Aufnahme verbunden wird. Hierzu wird das Mikroskopobjektiv 22 aus der entsprechenden Halterung herausgeschraubt und die Auslenkeinheit mit Hilfe des Anschlusselements 52 ggf. unter zu Hilfenahme eines Adapters in die entsprechende Aufnahme des konfokalen Mikroskops eingeschraubt.

Innerhalb des Gehäuses ist ein im Wesentlichen im 45°-Winkel zu dem Anregungslicht 12 angeordneter Umlenkspiegel 18 vorgesehen. Bei dem Umlenkspiegel 18 handelt es sich im dargestellten Ausführungsbeispiel um ein Prisma.

Ferner ist in einem Hohlraum 56 des Gehäuses 50 der Spiegel 20 angeordnet. Der Spiegel 20 ist entsprechend dem in Fig. 1 dargestellten Spiegel 20 in einem, Winkel zu der Rotationsachse 40 angeordnet. Zum Antrieb des Auslenkspiegels 20 in einer Rotationsbewegung ist eine Antriebseinheit 58, wie beispielsweise ein Elektromotor vorgesehen. Durch Rotation des Auslenkspiegels 20 wird der Strahl des Anregungslichts 12 wie durch die gestrichelten Linien 60 in dem Mikroskopobjektiv 22 dargestellt, abgelenkt. In der in Fig. 2 dargestellten Projektion erfolgt somit wiederum eine Bewegung des Auslenkungslichts in Richtung des Pfeils 46. In einer Ansicht von oben auf das Objektiv 22 (Fig. 3) wird das Anregungslicht auf einer Ellipse 62 bewegt.

## Patentansprüche

1. Verfahren zur Untersuchung einer chemischen und/oder biologischen Probe, insbesondere in Hoch- und Medlum-Durchsatzscreeninganlagen, mit den Schritten:
Fokussieren eines Beobachtungsstrahls (12) in einem Beobachtungsvolumen (24) der Probe und
Bewegen des Beobachtungsstrahls (12) in dem Beobachtungsvolumen (24) der Probe, indem der Beobachtungsstrahl (12) von einem Auslenkspiegel (20) abgelenkt wird,
wobei der Auslenkspiegel (20) eine Taumelbewegung um eine Rotationsachse (40) ausführt sodass ein kontinuierliches Bewegen des Beobachtungsstrahls (12) in dem Beobachtungsvolumen (24) der Probe ohne vollständiges Abbremsen und anschliessender Beschleunigen erfolgt, **dadurch gekennzeichnet, dass** der Auslenkspiegel (20) mit der Rotationsachse (40) einen Winkel (∞) im Bereich 90,1° bis 95° aufweist.

2. Verfahren nach Anspruch 1, **dadurch gekennzeichnet, dass** der Beobachtungsstrahl (12) unidirektional bewegt wird.

3. Verfahren nach Anspruch 1 oder 2, **dadurch gekennzeichnet, dass** der Beobachtungsstrahl (12) auf einer in sich geschlossenen Bahn bewegt wird.

4. Verfahren nach einem der Ansprüche 1-3, **dadurch gekennzeichnet, dass** zur Vergleichmäßigung der Verweildauer des Beobachtungsstrahls (12) an Beleuchtungsorten im Beleuchtungsvolumen (24) die Rotationsgeschwindigkeit des Auslenkspiegels variiert wird.

5. Verfahren nach einem der Ansprüche 1-4, **dadurch gekennzeichnet, dass** zur Vergleichmäßigung der auf Beleuchtungsorte der Probe wirkenden Photonen-Menge die Intensität des Beobachtungsstrahls (12) in Abhängigkeit der Bewegungsgeschwindigkeit des Beobachtungsstrahls (12) in dem Beobachtungsvolumen (24) gesteuert wird.

6. Verfahren nach einem der Ansprüche 1-5, **dadurch gekennzeichnet, dass** durch den Beobachtungsstrahl (12) in der Probe enthaltene Partikel zur Lumineszenz angeregt werden.

7. Verfahren nach Anspruch 6, **dadurch gekennzeichnet, dass** die von den Partikeln abgegebene Strahlung, insbesondere Fluoreszenzstrahlung, detektiert wird.

8. Mikroskop zur Durchführung des Verfahrens nach einem der Ansprüche 1-7, mit
einer Beleuchtungseinheit (10) zur Erzeugung eines Anregungslichts (12),
einem Mikroskopobjektiv (22) zur Fokussierung des Anregungslichts (12) in dem Beobachtungsvolumen (24) und
einem das Anregungslicht (12) ablenkenden Auslenkspiegel (20) zum Bewegen des Fokus in dem Beobachtungsvolumen (24), wobei der Auslenkspiegel (20) eine Taumelbewegung ausführt,
sodass ein kontinvierliches Bewegen des Beobachtungsstrahls in dem Beobachtungsvolumen der Probe ohne vollständiges Abbremsen und anschliessendes Beschleunigen erfolgt,
**dadurch gekennzeichnet, dass**
ein Winkel (∞) zwischen dem Auslenkspiegel (20) und einer Rotationsachse (40) im Bereich von 90,1° bis 95° liegt.

9. Mikroskop nach Anspruch 8, **dadurch gekennzeichnet, dass** das Anregungslicht (12) im Wesentlichen im Rotationszentrum (48) des Auslenkspiegels (20) auf den Auslenkspiegel (20) trifft.

10. Mikroskop nach Anspruch 8 oder 9, **dadurch gekennzeichnet, dass** der Winkel (α) des Auslenkspiegels (20) einstellbar ist.

11. Mikroskop nach Anspruch 10, **dadurch gekennzeichnet, dass** eine Verstelleinheit zum automatischen Verstellen des Winkels (α) des Auslenkspiegels (20) vorgesehen ist.

12. Mikroskop nach einem der Ansprüche 8-11, **dadurch gekennzeichnet, dass** der Auslenkspiegel (20) eben ist.

13. Mikroskop nach einem der Ansprüche 8-12, **gekennzeichnet durch** einen senkrecht zur Rotationsachse (40) des Auslenkspiegels (20) angeordneten Umlenkspiegel (18).

14. Mikroskop nach Anspruch 8, **gekennzeichnet durch** einen Strahlteiler (16), der das von der Beleuchtungseinheit (10) kommende Anregungslicht (12) in Richtung des Beobachtungsvolumens (24) lenkt und von dem Beobachtungsvolumen (24) abgegebenes Licht durchlässt, wobei der Strahlteiler (16) zusätzlich als Auslenkspiegel dient.

## Claims

1. A method for analyzing a chemical and/or biological sample, particularly in high- and medium throughput screening systems, comprising the following steps:
focusing an observation beam (12) in an observation volume (24) of the sample, and
moving the observation beam (12) in the observation volume (24) of the sample by causing the observation beam (12) to be deflected by a deflection mirror (20),
the deflection mirror (20) performing a tumbling movement about a rotational axis (40) in a manner effecting a continuous movement of the observation beam (12) in the observation volume (24) of the sample without complete braking and subsequent accelerating,
**characterized in that**
the deflection mirror (20) together with the rotational axis (40) forms an angle (α) in the range from 90.1° to 95°.

2. The method according to claim 1, **characterized in that** the observation beam (12) is moved unidirectionally.

3. The method according to claim 1 or 2, **characterized in that** the observation beam (12) is moved along a path closed in itself.

4. The method according to any one of claims 1-3, **characterized in that**, for uniformization of the dwell period of the observation beam (12) at illumination sites in the observation volume (24), the rotational speed of the deflection mirror is varied.

5. The method according to any one of claims 1-4, **characterized in that**, for uniformization of the photon quantity acting on illumination sites of the sample, the intensity of the observation beam (12) is controlled in dependence of the moving speed of the observation beam (12) in the observation volume (24).

6. The method according to any one of claims 1-5, **characterized in that**, under the influence the observation beam (12), particles contained in the sample are excited to generate luminescence.

7. The method according to claim 6, **characterized in that** the radiation emitted by the particles, especially fluorescence radiation, is detected.

8. A microscope for performing the method according to any one of claims 1-7, comprising
an illumination unit (10) for generating an exciting light (12),
a microscope objective (22) for focusing the exciting light (12) in the observation volume (24), and
a deflection mirror (20) arranged to deflect the exciting light (12) to move the focus in the observation volume (24), the deflection mirror (20) performing a tumble movement in a manner effecting a continuous movement of the observation beam in the observation volume of the sample without complete braking and subsequent accelerating,
**characterized in that**
an angle (α) between the deflection mirror (20) and a rotational axis (40) is in the range from 90.1° to 95°.

9. The microscope according to claim 8, **characterized in that** the exciting light (12) is incident on the deflection mirror (20) substantially in the center of rotation (48) of the deflection mirror (20).

10. The microscope according to claim 8 or 9, **characterized in that** the angle (α) of the deflection mirror (20) is adjustable.

11. The microscope according to claim 10, **characterized in that** an adjustment unit is provided for automatic adjustment of the angle (α) of the deflection mirror (20).

12. The microscope according to any one of claims 8-11, **characterized in that** the deflection mirror (20) is planar.

13. The microscope according to any one of claims 8-12, **characterized by** a reflection mirror (18) arranged vertically to the axis of rotation (40) of the deflection mirror (20).

14. A microscope according to claim 8, **characterized by** a beam splitter (16) by which the exciting light (12) coming from the illumination unit (10) is guided towards the observation volume (24), and which transmits the light emitted from the observation volume (24), the beam splitter (16) further serving as a deflection mirror.

## Revendications

1. Procédé pour l'analyse d'un échantillon chimique et/ou biologique, en particulier dans des équipements de test à débit élevé et moyen, comprenant les étapes qui consistent à:
focaliser un faisceau d'observation (12) dans un volume d'observation (24) de l'échantillon et
déplacer le faisceau d'observation (12) dans le volume d'observation (24) de l'échantillon, en déviant le faisceau d'observation (12) au moyen d'un miroir déviateur (20),
le miroir déviateur (20) exécutant un mouvement de nutation autour d'un axe de rotation (40) de telle sorte qu'un déplacement continu du faisceau d'observation (12) dans le volume d'observation (24) de l'échantillon se fasse sans freinage total, ni accélération consécutive,
**caractérisé en ce que** le miroir déviateur (20) forme avec l'axe de rotation (40) un angle (α) dans la plage 90,1° à 95°.

2. Procédé selon la revendication 1, **caractérisé en ce que** le faisceau d'observation (12) est soumis à un déplacement unidirectionnel.

3. Procédé selon la revendication 1 ou 2, **caractérisé en ce que** le faisceau d'observation (12) est déplacé sur une trajectoire fermée sur elle-même.

4. Procédé selon l'une des revendications 1 à 3, **caractérisé en ce que** pour l'homogénéisation de la durée de séjour du faisceau d'observation (12) en des lieux d'éclairage dans le volume d'observation (24), la vitesse de rotation du miroir déviateur est modifiée.

5. Procédé selon l'une des revendications 1 à 4, **caractérisé en ce que** pour l'homogénéisation de la quantité de photons agissant sur des lieux d'éclairage de l'échantillon, l'intensité du faisceau d'observation (12) est régulée en fonction de la vitesse de déplacement du faisceau d'observation (12) dans le volume d'observation (24).

6. Procédé selon l'une des revendications 1 à 5, **caractérisé en ce que** des particules de luminescence, contenues dans l'échantillon, sont excitées par le faisceau d'observation (12).

7. Procédé selon la revendication 6, **caractérisé en ce que** le rayonnement émis par les particules, en particulier un rayonnement de fluorescence, est détecté.

8. Microscope pour la mise en oeuvre du procédé selon l'une des revendications 1 à 7, comprenant
une unité d'éclairage (10) destinée à générer une lumière d'excitation (12),
un objectif de microscope (22) destiné à focaliser la lumière d'excitation (12) dans le volume d'observation (24) et
un miroir déviateur (20) déviant la lumière d'excitation (12), afin de déplacer le foyer dans le volume d'observation (24), le miroir déviateur (20) exécutant un mouvement de nutation de telle sorte qu'un déplacement continu du faisceau d'observation dans le volume d'observation de l'échantillon se fasse sans freinage total, ni accélération consécutive,
**caractérisé en ce que**
un angle (α) entre le miroir déviateur (20) et un axe de rotation (40) se situe dans la plage de 90,1 ° à 95°.

9. Microscope selon la revendication 8, **caractérisé en ce que** la lumière d'excitation (12) tombe sur le miroir déviateur (20) sensiblement au centre de rotation (48) du miroir déviateur (20).

10. Microscope selon la revendication 8 ou 9, **caractérisé en ce que** l'angle (α) du miroir déviateur (20) est réglable.

11. Microscope selon la revendication 10, **caractérisé en ce qu'**une unité d'ajustement destinée à ajuster automatiquement l'angle (α) du miroir déviateur (20), y est prévue.

12. Microscope selon l'une des revendications 8 à 11, **caractérisé en ce que** le miroir déviateur (20) est plan.

13. Microscope selon l'une des revendications 8 à 12, **caractérisé par** un miroir de renvoi (18) disposé perpendiculairement à l'axe de rotation (40) du miroir déviateur (20).

14. Microscope selon la revendication 8, **caractérisé par** un séparateur de faisceaux (16) qui dévie la lumière d'excitation (12), provenant de l'unité d'éclairage (10), en direction du volume d'observation (24) et transmet la lumière émise par le volume d'observation (24), le séparateur de faisceaux (16) servant en plus de miroir déviateur.
